# EUROPEAN PATENT APPLICATION

(11) **EP 4 654 123 A1**
(43) Date of publication of application: **26.11.2025**
(21) Application number: 25171578.5
(22) Date of filing: 22.04.2025
(51) Int. Cl.: G06T 5/92

(54) **IMAGE PROCESSING APPARATUS, CONTROL METHOD, STORAGE MEDIUM AND PROGRAM**

(30) Priority: 20.05.2024 JP 2024082018
(71) Applicant: CANON KABUSHIKI KAISHA, Tokyo 146-8501 (JP)
(72) Inventor: YOSHIDA, Akimitsu, Tokyo, 146-8501 (JP)
(74) Representative: TBK

(57) **Abstract**

An image processing apparatus includes a first generation unit configured to generate first conversion information used when images having different dynamic ranges are generated from a first image, an image resizing processing unit configured to execute resizing processing on the first image, and a control unit configured to control whether or not to execute resizing processing on the first conversion information added to the first image when resizing processing is executed on the first image.

## Description

### BACKGROUND

### Technical Field

The disclosure relates to resizing processing of an image.

### Description of the Related Art

There is a known practice of mutually converting a high dynamic range (HDR) image and a standard dynamic range (SDR) image using conversion information called a gain map so as to be compatible to a dynamic range displayable by a display apparatus (Japanese Patent Laid-Open No. 2018-530281). The gain map is generated from a RAW image (main image) and stored in an image file. Japanese Patent Laid-Open No. 2007-180851 describes a method of reducing a processing load when generating a gain map by reducing a RAW image.

By adding a gain map to a main image and storing the main image into an image file in Japanese Patent Laid-Open No. 2007-180851, it is possible to convert an HDR image into an SDR image and display the SDR image on a display apparatus compatible to SDR.

However, Japanese Patent Laid-Open No. 2007-180851 does not mention handling of a gain map when a main image added with a gain map is resized (enlarged or reduced).

### SUMMARY

According to a first aspect of the disclosure, the present invention provides an image processing apparatus as specified in claims 1 to 15.

According to a second aspect of the embodiments, the present invention provides a control method of an image processing apparatus as specified in claim 16.

According to a third aspect of the embodiments, the present invention provides a computer-readable storage medium as specified in claim 17.

According to a fourth aspect of the embodiments, the present invention provides a program as specified in claim 18.

Further features of the disclosure will become apparent from the following description of exemplary embodiments (with reference to the attached drawings).

### BRIEF DESCRIPTION OF THE DRAWINGS

FIG. 1 is a block diagram illustrating a hardware configuration of an image capture apparatus applied with an image processing apparatus according to a present embodiment.
FIG. 2 is a block diagram illustrating a functional configuration of an image processing unit according to the present embodiment.
FIGS. 3A to 3D are views describing a generation method of a gain map according to the present embodiment.
FIGS. 4A and 4B are views illustrating region integration processing of a gain map according to the present embodiment.
FIGS. 5A and 5B are views illustrating region division processing of a gain map according to the present embodiment.
FIGS. 6A and 6B are views illustrating a data configuration of a main image added with a gain map according to the present embodiment.
FIG. 7 is a flowchart showing control processing at the time of shooting according to a first embodiment.
FIG. 8 is a flowchart showing control processing at the time of image reduction according to a second embodiment.
FIGS. 9A and 9B are views describing gain map generation processing at the time of image enlargement according to a third embodiment.

### DESCRIPTION OF THE EMBODIMENTS

Hereinafter, embodiments will be described in detail with reference to the attached drawings. Note, the following embodiments are not intended to limit the scope of the disclosure. Multiple features are described in the embodiments, but limitation is not made to a disclosure that requires all such features, and multiple such features may be combined as appropriate. Furthermore, in the attached drawings, the same reference numerals are given to the same or similar configurations, and redundant description thereof is omitted.

In the present embodiment, an example of resizing a gain map in a case of applying the image processing apparatus of the disclosure to an image capture apparatus such as a digital camera, generating a gain map from an original RAW shot by the digital camera, and resizing (enlarging or reducing) the original RAW image will be described.

Note that the image capture apparatus according to the present embodiment is not limited to the digital camera, and may be a personal computer (laptop PC or tablet PC), a smartphone, a web camera such as a monitoring camera, a medical camera, or the like.

### APPARATUS CONFIGURATION

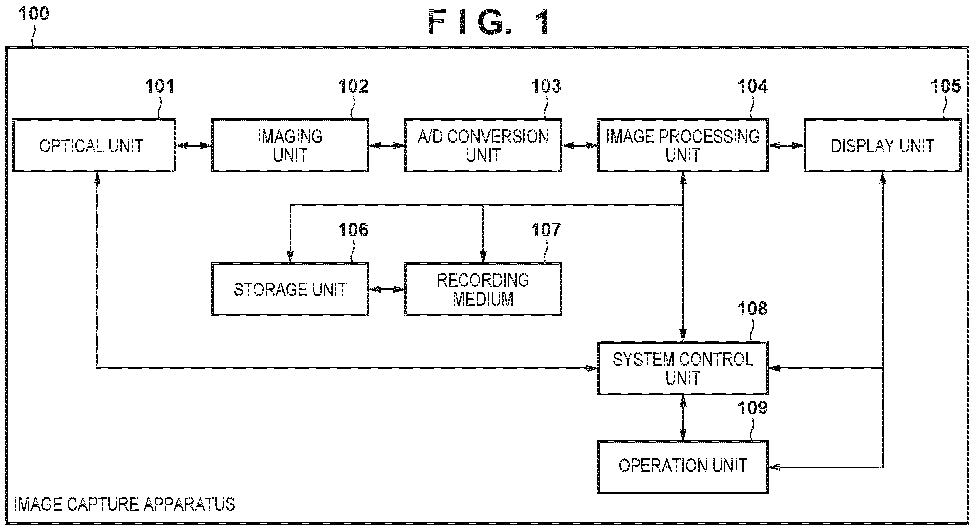

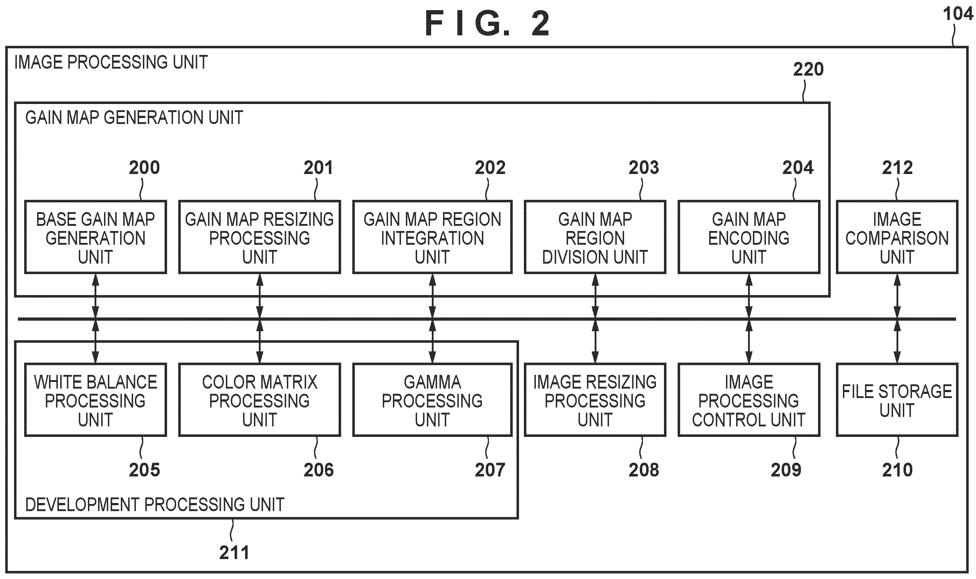

First, a configuration and a function of an image capture apparatus 100 according to the present embodiment will be described with reference to FIGS. 1 and 2.

FIG. 1 is a block diagram illustrating a hardware configuration of the image capture apparatus 100 according to the present embodiment. FIG. 2 is a block diagram illustrating a functional configuration of an image processing unit 104 of the image capture apparatus 100 according to the present embodiment.

The image capture apparatus 100 includes an optical unit 101, an imaging unit 102, an A/D conversion unit 103, the image processing unit 104, a display unit 105, a storage unit 106, a recording medium 107, a system control unit 108, and an operation unit 109.

The optical unit 101 includes a lens group including a zoom lens and a focus lens, and a shutter having an aperture function. The optical unit 101 adjusts the magnification, the focus position, and the light amount of a subject image. The magnification, the in-focus state, and the light amount of the subject image reaching the imaging unit 102 are adjusted, and an image is formed on an image capture surface of the imaging unit 102.

The imaging unit 102 includes an image sensor including a CCD and a CMOS that converts an optical image of the subject formed by the optical unit 101 into an electrical signal. The imaging unit 102 generates still image data and moving image data including an analog signal.

The A/D conversion unit 103 converts the analog signal generated by the imaging unit 102 into a digital signal. The A/D conversion unit 103 generates still image data or moving image data including a digital signal from still image data or moving image data including an analog signal.

The image processing unit 104 executes various types of image processing on the image data output from the A/D conversion unit 103. The various types of image processing include, for example, development processing such as pixel interpolation, gamma conversion processing for generating a gain map, and color matrix processing. By compressing and encoding still image data subjected to image processing in a JPEG format or the like, or encoding moving image data in a moving image compression method such as an MP4 format, the image processing unit 104 generates and records, into the recording medium 107, an image file. The image processing unit 104 decodes a still image file read from the recording medium 107, and decodes a moving image file read from the recording medium 107. The image processing unit 104 can perform similar image processing not only on the image data output from the A/D conversion unit 103 but also on the image data read from the recording medium 107. A detailed configuration and function of the image processing unit 104 will be described later with reference to FIG. 2.

The display unit 105 performs display of image data (live view) captured by the imaging unit 102, display of image data read from the recording medium 107, display of a graphical user interface (GUI) for interactive operation, and the like. The display unit 105 includes, for example, a display device such as a liquid crystal display or an organic EL display. The display unit 105 includes a display device in which an expressible brightness range (dynamic range) is compatible to a standard dynamic range (SDR). The image processing unit 104 converts a high dynamic range (HDR) image that is a main image read from the recording medium 107 into an SDR image by applying a gain map added to the HDR image. The display unit 105 displays the SDR image converted from the HDR image by applying the gain map in the image processing unit 104. This can reduce a case where an HDR image is displayed on the display unit 105 not compatible to the HDR, and prevent a situation where an image is displayed with image quality not assumed by a user.

The storage unit 106 is a volatile memory that stores various types of information such as an image processing program and a gain map necessary for image processing by the image processing unit 104, and stores image data and the like during image processing.

The recording medium 107 is a nonvolatile memory that records an image file added with a gain map. The recording medium 107 is, for example, a memory card, a hard disk, or the like, and is built in or detachable from the image capture apparatus 100.

The system control unit 108 includes a processor (CPU) that performs arithmetic processing and control processing of the image capture apparatus 100, a volatile memory (ROM) that stores a program executed by the processor, and a work memory (RAM) loaded with a program read from the nonvolatile memory, constants, variables, and the like for executing the program. The system control unit 108 controls each component of the image capture apparatus 100 by loading, into the RAM, a program stored in the ROM and executing the program.

The operation unit 109 is an operation member such as a switch, a button, or a touch panel that receives various operations from the user and notifies the system control unit 108 of the operations. The operation unit 109 includes at least a still image shooting button, a moving image shooting button, a mode dial, and a power switch.

The still image shooting button is an operation member for instructing the system control unit 108 to perform shooting processing of a still image. The moving image shooting button is an operation member for instructing the system control unit 108 to perform shooting processing of a moving image.

The mode dial is an operation member for switching an operation mode of the image capture apparatus 100. The mode dial can switch the operation mode of the image capture apparatus 100 to any of a still image shooting mode, a moving image shooting mode, and a reproduction mode.

The power switch is an operation member for switching on/off of the power of the image capture apparatus 100.

When the still image shooting button is pressed halfway, the system control unit 108 is notified of an instruction of shooting preparation processing. In the still image shooting mode, when the still image shooting button is pressed halfway, the system control unit 108 starts shooting preparation processing (AE processing and AF processing) of a still image. When the still image shooting button is pressed fully, the system control unit 108 is notified of an instruction of shooting processing. When the still image shooting button is pressed fully, the system control unit 108 executes still image shooting processing of recording, on the recording medium 107, image data captured by the imaging unit 102.

In the moving image shooting mode, the system control unit 108 performs shooting preparation processing (AE processing and AF processing) on the image data (frame) captured by the imaging unit 102 in response to the moving image shooting button being pressed first, continues moving image shooting processing of recording, on the recording medium 107, a moving image for a predetermined time, and stops the moving image shooting processing in response to the moving image shooting button being pressed again.

In the example of FIG. 1, the optical unit 101 is configured as a part of the image capture apparatus 100 including the imaging unit 102, but is not limited to this configuration. For example, as in a single-lens reflex camera, an interchangeable optical unit (interchangeable lens) may be configured to be detachable from the image capture apparatus 100.

FIG. 2 is a block diagram illustrating a functional configuration of the image processing unit 104 according to the present embodiment.

The image (RAW image) input to the image processing unit 104 is data generated by converting, by the A/D conversion unit 103, an analog image signal generated by the imaging unit 102 into a digital image signal, and is a Bayer image including three components of red (R), green (G), and blue (B).

By executing various types of image processing (development processing) on the RAW image input to the image processing unit 104, a development processing unit 211 generates an image in a predetermined format such as YUV422. The development processing unit 211 includes a white balance processing unit 205, a color matrix processing unit 206, and a gamma processing unit 207.

The white balance processing unit 205 calculates a white balance gain based on the RAW image input to the image processing unit 104, and adjusts the white balance by applying the gain to the signal value of each pixel of red (R), green (G), and blue (B).

The color matrix processing unit 206 executes color matrix processing for converting the color gamut of image data on the image data output from the white balance processing unit 205. The color matrix processing can change a conversion coefficient in accordance with spectral characteristics of the image sensor of the imaging unit 102, the color gamut of an output image such as BT.601 or BT.2020, the target value of color reproduction, and the like.

The gamma processing unit 207 performs, on the image data output from the color matrix processing unit 206, gamma processing of converting a signal value depending on a gamma characteristic (opto-electronic transfer function: OETF) for generating an image signal adapted to the gamma characteristic of the output destination. For example, in order to generate an SDR image, gamma processing based on gamma of the sRGB standard is performed, and in order to generate an HDR image, gamma processing based on a gamma characteristic of OETF defined in ITU-R BT.2100 is performed.

An image resizing processing unit 208 resizes (reduces or enlarges) the RAW image input to the image processing unit 104 and the YUV image output from the development processing unit 211. The image resizing processing unit 208 generates a resized image using a known method such as bilinear interpolation or bicubic interpolation. Note that in the enlargement processing, super-resolution processing may be performed by machine learning such as deep learning.

A gain map generation unit 220 generates a gain map based on the RAW image input to the image processing unit 104. The gain map is conversion information used when the signal value of each pixel of the main image is corrected to generate images having different brightness. The gain map has a data configuration in which a gain value for correcting a signal value for each pixel is two-dimensionally arrayed corresponding to each pixel. In the present embodiment, an example of a gain map for converting an HDR image into an SDR image will be described.

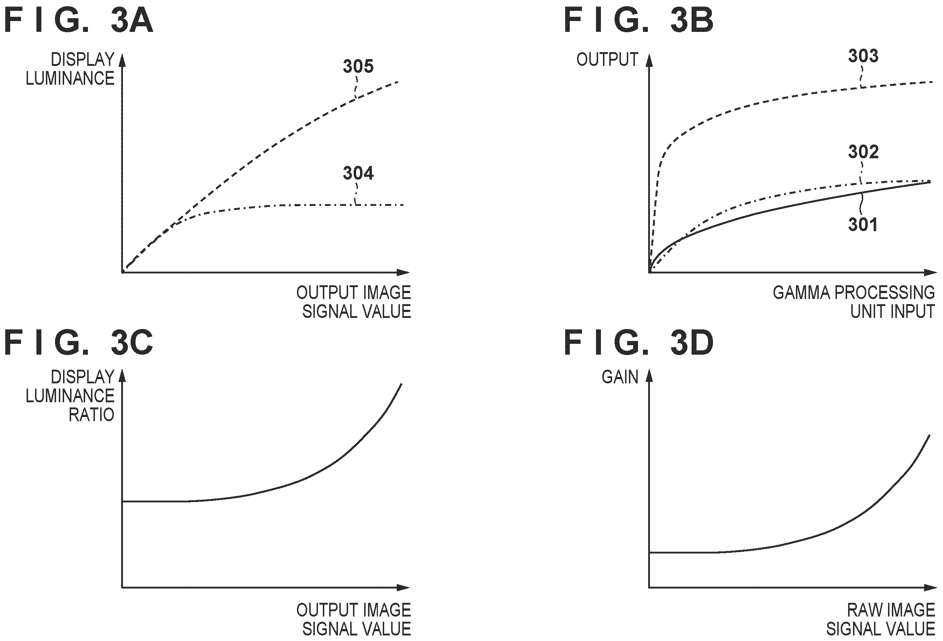

FIGS. 3A to 3D are views describing a generation method of a gain map for converting an HDR image into an SDR image.

FIG. 3A illustrates a relationship between a signal value of an output image and display luminance in a case where the SDR image and the HDR image (output image) output from the image capture apparatus 100 are displayed on a display device compatible with HDR. A broken line 304 illustrates the relationship between the signal value of the SDR image and the display luminance. A broken line 305 illustrates the relationship between the signal value of the HDR image and the display luminance. The display luminance has a characteristic such that the display luminance of the SDR image and the display luminance of the HDR image match each other when the signal value of the output image is small, and there is a difference in the display luminance as the signal value increases. Such a display luminance characteristic can display the HDR image and the SDR image so as not to give a viewer a feeling of strangeness even when the HDR image and the SDR image are mixed.

In order to achieve the display luminance characteristic as illustrated in FIG. 3A, a gamma characteristic based on an electro-optical transfer function (EOTF) of a display device compatible with HDR may be set in the gamma processing unit 207. FIG. 3B illustrates the gamma characteristic set in the gamma processing unit 207 when the SDR image and the HDR image are generated. A gamma characteristic 301 is a gamma characteristic of the sRGB standard. A gamma characteristic 302 is SDR gamma set in the gamma processing unit 207 when an SDR image is generated in the image capture apparatus 100. The SDR gamma 302 has contrast higher than that of the gamma characteristic 301 of the sRGB standard, and tonality adjusted so as to improve the appearance of the image shot by the image capture apparatus 100. The gamma characteristic 303 is HDR gamma set in the gamma processing unit 207 when the HDR image is generated in the image capture apparatus 100.

FIG. 3C illustrates a ratio between signal values of the HDR image and the SDR image in FIG. 3A and display luminance. FIG. 3D illustrates an example in which the ratio in FIG. 3C is converted from the gamma characteristic in FIG. 3B to the relationship of the ratio of the display luminance of the HDR image and the SDR image with respect to the signal value of the RAW image.

By storing gain information for the signal value of the RAW image illustrated in FIG. 3D into the storage unit 106, a base gain map generation unit 200 can calculate the gain value for converting the HDR image (main image) into the SDR image from the input RAW image. The gain value generated for each pixel or each of a plurality of pixels (2 × 2 pixels or the like) of the RAW image is called a base gain map. Note that the base gain map is not limited to information for converting an HDR image into an SDR image, and may be information for converting an SDR image into an HDR image or information for converting an HDR image into an HDR image having a different dynamic range.

A gain map resizing processing unit 201 performs resizing processing (reduction or enlargement) for changing the resolution of all regions of the base gain map generated by the base gain map generation unit 200. The resizing processing method may be a known method such as bilinear interpolation or bicubic interpolation, or may be resizing processing by machine learning such as deep learning.

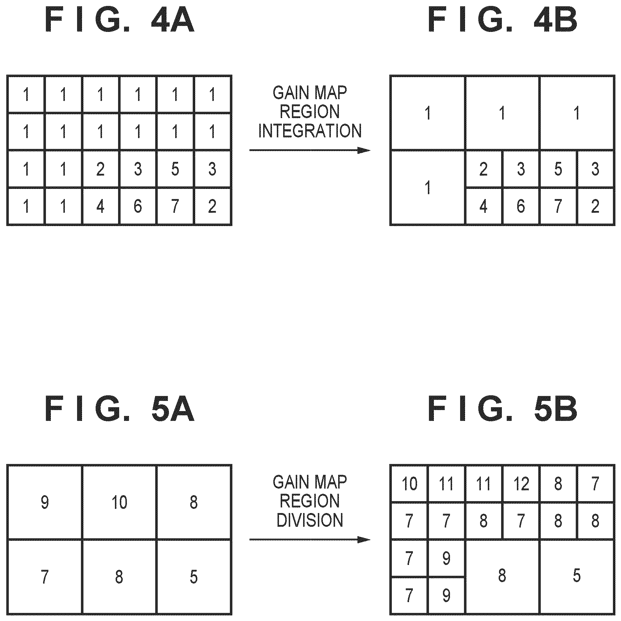

A gain map region integration unit 202 performs integration of maps of adjacent regions (gain map region integration processing) in order to reduce the data amount of the gain map generated by the base gain map generation unit 200 or the gain map resizing processing unit 201. FIGS. 4A and 4B illustrate region integration processing of a gain map by the gain map region integration unit 202. FIG. 4A illustrates a gain map generated by the base gain map generation unit 200 or the gain map resizing processing unit 201. For example, the data amount of the gain map is reduced by bringing the gain map of FIG. 4A into data collected in a region 2 × 2 as in FIG. 4B. Note that in the examples of FIGS. 4A and 4B, the case where the gains of adjacent regions are identical is illustrated, but the gains may be integrated in a case where the gains in regions can be regarded as identical, such as a case where all peripheral regions of a region of interest have an identical gain. A resolution other than 1 × 1 and 2 × 2 may be adopted.

FIGS. 5A and 5B illustrate an example of region division of a gain map by the gain map region division unit 203. The gain map region division unit 203 performs region division of partially or entirely increasing the resolution of the gain map with respect to the gain map having the region already integrated by the gain map region integration unit 202 or the like.

A gain map encoding unit 204 performs processing of reducing the data amount on the gain map output from the gain map region integration unit 202. For example, the bit depth of the gain map may be reduced by taking the logarithm of the gain map, or the data amount of the gain map may be reduced by performing lossless compression or lossy compression. The base gain map generated by the base gain map generation unit 200 may be input to the gain map encoding unit 204 as it is.

An image comparison unit 212 calculates a difference between two images for each pixel or for each region. Based on the difference information calculated by the image comparison unit 212, the gain map region integration unit 202 performs gain map region integration processing or the gain map region division unit 203 performs gain map region division processing.

A file storage unit 210 generates a file in which the main image generated by the development processing unit 211, a sub image (reduced image or enlarged image) having a resolution different from that of the main image generated by the image resizing processing unit 208, and the gain maps of the main image and the sub image are put together into one. The format of the file is defined in CIPA DC-007 Multi-Picture Format (MPF), which is a Camera & Imaging Products Association (CIPA) standard.

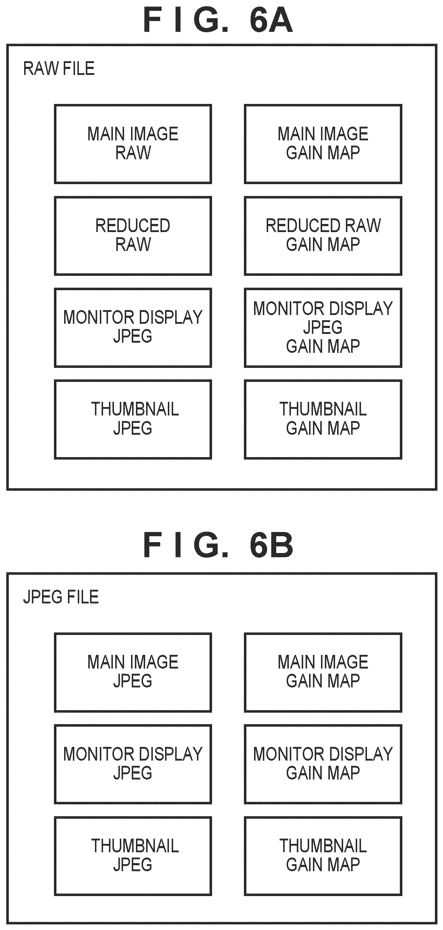

FIGS. 6A and 6B illustrate the data configuration of the main image added with the gain map according to the present embodiment.

FIG. 6A illustrates the data configuration of a RAW image file.

The RAW image file includes a main image RAW, a reduced RAW in which the main image RAW is resized by the image resizing processing unit 208, a monitor display JPEG used for display on a display device or the like, and a thumbnail JPEG used at the time of multi-display of simultaneously displaying a plurality of images. The gain maps (main image gain map, reduced RAW gain map, monitor display JPEG gain map, thumbnail gain map) corresponding to respective images are also simultaneously recorded in the RAW image file. An image other than the main image such as reduced RAW, monitor display JPEG, and thumbnail JPEG is called a sub image, and a gain map other than the main image gain map is called a sub image gain map. Note that the number of gain maps may be reduced by using both the main image gain map and the reduced RAW gain map or using both the reduced RAW gain map and the monitor display JPEG gain map. Furthermore, various combinations such as a configuration including no sub image and no sub image gain map and a configuration including a sub image and no sub image gain map are possible.

FIG. 6B illustrates the data configuration of a JPEG image file.

The JPEG image file is similar to the data configuration of the RAW image file of FIG. 6A except that the main image RAW is replaced with a main image JPEG and no reduced RAW and no reduced RAW gain map exist.

An image processing control unit 209 controls each component of the image processing unit 104 of FIG. 2 to generate and regenerate a main image, a sub image, a gain map, and the like from the input RAW image and generate an output image to the display device.

### [FIRST EMBODIMENT]

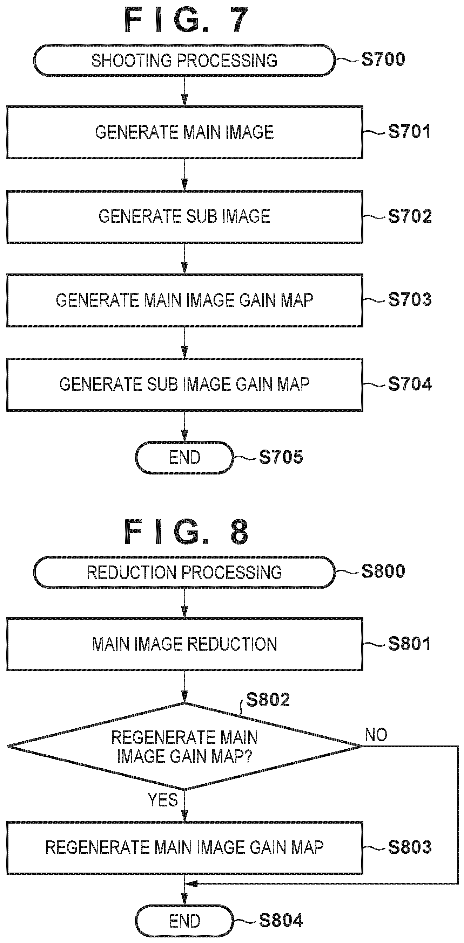

Hereinafter, gain map generation processing at the time of shooting by the image capture apparatus 100 according to the first embodiment will be described with reference to FIG. 7.

FIG. 7 is a flowchart showing control processing at the time of shooting according to the first embodiment. The processing of FIG. 7 is implemented by the system control unit 108 executing a program stored in the ROM and controlling the image processing unit 104.

The processing of FIG. 7 is started when the image capture apparatus 100 is powered on and the system control unit 108 receives a shooting instruction from a shutter switch included in the operation unit 109 (step S700). The system control unit 108 controls the optical unit 101, the imaging unit 102, and the A/D conversion unit 103 to generate a RAW image.

In step S701, the image processing control unit 209 controls the development processing unit 211 to generate the main image (HDR image) based on the RAW image input to the image processing unit 104.

In step S702, the image processing control unit 209 outputs the main image generated in step S701 to the image resizing processing unit 208. The image resizing processing unit 208 executes resizing processing on the main image to generate a sub image. Note that the sub image may be generated by outputting, to the development processing unit 211, the reduced RAW in which the RAW image is resized by the image resizing processing unit 208, and by the development processing unit 211 executing development processing on the reduced RAW.

In step S703, the image processing control unit 209 controls the gain map generation unit 220 to generate the main image gain map from the main image generated in step S701. The main image gain map may have a configuration having the same resolution as that of the main image, or may have a configuration having a resolution reduced to 1/4 or the like by the gain map resizing processing unit 201. The gain map region integration processing may be performed by the gain map region integration unit 202.

In step S704, the image processing control unit 209 controls the gain map resizing processing unit 201 and the gain map region integration unit 202 to generate the sub image gain map from the main image gain map generated in step S703. Note that the reduced RAW in which the RAW image is resized by the image resizing processing unit 208 may be output to the gain map generation unit 220, and the gain map generation unit 220 may generate the sub image gain map.

In step S705, the image processing control unit 209 outputs the image and the gain map generated in steps S701 to S704 to the file storage unit 210, and the file storage unit 210 generates a file in which the image and the gain map are put together into one. The system control unit 108 stores, into the recording medium 107, the file generated by the file storage unit 210, and ends the processing.

### [SECOND EMBODIMENT]

Hereinafter, gain map generation processing at the time of image reduction by the image capture apparatus 100 according to the second embodiment will be described with reference to FIG. 8.

In the second embodiment, it is assumed that an image file having the configuration illustrated in FIG. 6B is stored in the recording medium 107.

FIG. 8 is a flowchart showing control processing at the time of image reduction according to the second embodiment.

The user selects, via the operation unit 109, an image to be subjected to reduction processing from the images stored in the recording medium 107, whereby the processing is started (step S800).

When the processing is started in step S800, the system control unit 108 reads and stores, into the storage unit 106, the main image file selected by the user from the recording medium 107.

In step S801, the image processing control unit 209 controls the image resizing processing unit 208 to perform reduction processing on the main image stored in the storage unit 106 in accordance with the reduction rate designated by the user via the operation unit 109.

In step S802, the image processing control unit 209 determines whether or not to regenerate the main image gain map. Upon determining not to regenerate the main image gain map, the image processing control unit 209 skips main image gain map regeneration processing in step S803, and proceeds with the processing to step S804.

In step S804, the image processing control unit 209 outputs, to the file storage unit 210, the main image file stored in the storage unit 106 in step S800 and the reduced image generated in step S801, generates and stores, into the recording medium 107, a file in which the main image is replaced with the reduced image generated in step S801 with respect to the main image file stored in the storage unit 106 in step S800, and ends the processing.

Upon determining to regenerate the main image gain map in step S802, the image processing control unit 209 proceeds with the processing to step S803.

Here, the determination processing in step S802 will be described. For example, when the resizing rate designated by the user satisfies a predetermined condition, that is, when the reduction rate is close to 1, that is, the difference in the number of pixels between the main image and the resized image is small, the image processing control unit 209 determines that it is not necessary to regenerate the gain map of the main image. In a case where the gain map of the main image can be substituted with the gain map of the sub image such as a case where the reduction rate designated by the user is close to the pixel number ratio between the main image and the sub image, the image processing control unit 209 determines that it is not necessary to regenerate the gain map of the main image. On the contrary, for example, in a case where a sufficiently large gain map with respect to the main image is included (the pixel number ratio is 1: 1 or the like) or in a case where a gain map on which region integration is not performed is stored, there is a high possibility that the data size can be greatly reduced by regeneration of the gain map, and therefore, the image processing control unit 209 determines that regeneration of the gain map is necessary.

In step S803, the image processing control unit 209 performs regeneration of the main image gain map. The regeneration of the main image gain map is implemented by a combination of one or a plurality of processing among data compression processing such as resolution change processing by the gain map resizing processing unit 201, region division processing by the gain map region division unit 203, region integration processing by the gain map region integration unit 202, and bit depth change processing by the gain map encoding unit 204. In a case where the regeneration of the gain map is completed in step S803, the image processing control unit 209 proceeds with the processing to step S804, outputs the main image file stored in the storage unit 106 in step S800, the reduced image generated in step S801, and the main image gain map regenerated in step S803 to the file storage unit 210, with respect to the main image file stored in the storage unit 106 in step S800, generates and stores, into the recording medium 107, the main image is replaced with the reduced image generated in step S801, a file in which the main image gain map is replaced with the main image gain map regenerated in step S803, and ends the processing.

In the second embodiment, the image file having the configuration as illustrated in FIG. 6B has been described, but similar processing is possible also for an image file having no sub image and no sub image gain map.

According to the second embodiment, by also resizing the gain map added to the main image file when resizing the main image, it is possible to achieve both size reduction and accuracy retention of the gain map.

### [THIRD EMBODIMENT]

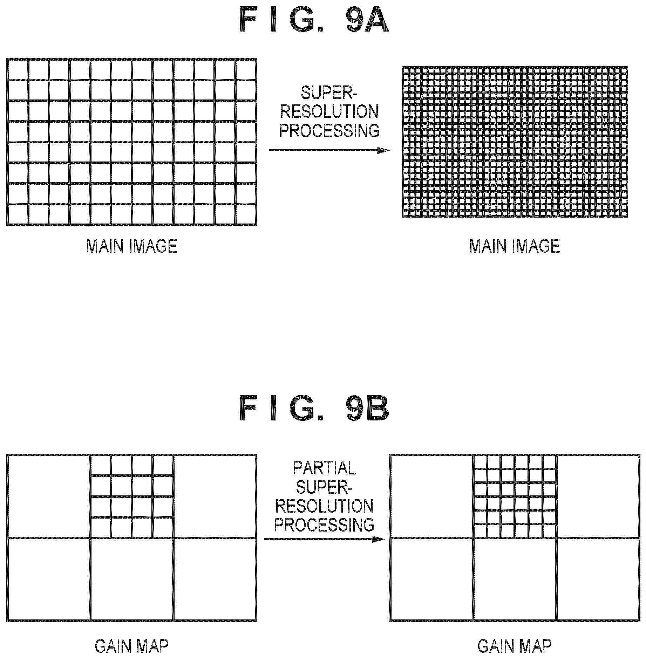

Hereinafter, gain map generation processing at the time of image enlargement by the image capture apparatus 100 of the third embodiment will be described with reference to FIGS. 9A and 9B.

The image enlargement processing of the third embodiment is similar to that of the case where the reduction in the reduction processing of FIG. 8 of the second embodiment is rephrased as enlargement.

FIGS. 9A and 9B are views explaining gain map generation processing at the time of image enlargement according to the third embodiment.

As illustrated in FIG. 9A, the image processing control unit 209 executes known super-resolution processing on the main image by the image resizing processing unit 208. In this case, it is assumed that the gain map corresponding to the main image includes a region not subjected to region integration and a region subjected to region integration as illustrated in FIG. 9B. In the gain map, it is considered that there is no problem even if the super-resolution processing is performed only on the region not subjected to region integration, and therefore the super-resolution processing is partially performed in order to save the time required for the super-resolution processing. In a similar way of thinking, the super-resolution processing may be performed only on the gain map of a region where the resolution is greatly improved by the super-resolution processing. For whether or not the resolution is greatly improved, the image comparison unit 212 may determine a difference between the main image subjected to the super-resolution processing and the image enlarged by a known interpolation technique.

According to the third embodiment, in a case of also resizing the gain map added to the main image file in response to the main image being resized, by partially resizing the gain map, it is possible to save time required for resizing the gain map.

### [OTHER EMBODIMENTS]

Embodiment(s) of the disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An image processing apparatus (100) comprising:
a first generation means (220) configured to generate first conversion information used when images having different dynamic ranges are generated from a first image;
an image resizing processing means (208) configured to execute resizing processing on the first image; and
a control means (209) configured to control whether or not to execute resizing processing on the first conversion information added to the first image when resizing processing is executed on the first image.

2. The apparatus according to claim 1, wherein
the control means performs control so as to perform resizing processing of the first conversion information when a resizing rate of the first image does not satisfy a predetermined condition.

3. The apparatus according to claim 2, further comprising
a file storage means (210) configured to generate a first file storing the first image and the first conversion information generated from the first image, wherein
when resizing processing of the first conversion information is performed, the file storage means generates, with respect to the first file, a file in which the first image is replaced with a resized second image and the first conversion information is replaced with resized second conversion information.

4. The apparatus according to claim 2 or 3, wherein
the resizing processing includes reduction processing, and
the predetermined condition is a case where the first conversion information can be substituted with resized second conversion information in a case where a difference in resolution between the first image and a resized second image is smaller than a predetermined value.

5. The apparatus according to claim 1, wherein
in a case where a resizing rate of the first image satisfies a predetermined condition, the control means performs control so as not to perform resizing processing of the first conversion information.

6. The apparatus according to claim 3, wherein
in a case where resizing processing of the first conversion information is not performed, the file storage means generates, with respect to the first file, a file in which the first image is replaced with a resized second image.

7. The apparatus according to claim 5 or 6, wherein
the resizing processing includes reduction processing, and
the predetermined condition is a case where the first conversion information can be substituted with resized second conversion information in a case where a difference in resolution between the first image and a resized image is smaller than a predetermined value.

8. The apparatus according to any one of claims 1 to 7 wherein
the first conversion information constitutes a gain map in which a gain value of a signal value for each pixel is determined, and
resizing processing of the gain map includes any one or a plurality of processing of
resolution change processing of changing a resolution of all regions of the gain map,
region integration processing of integrating some regions of the gain map, and
region division processing of dividing some regions of the gain map.

9. The apparatus according to claim 8, wherein
the control means controls which processing of the resolution change processing, the region integration processing, and the region division processing to perform depending on a resizing rate of the first image.

10. The apparatus according to any one of claims 1 to 9, wherein
the image resizing processing means generates one or a plurality of second images in which the first image is resized, and
when executing the resizing processing on the first image, the control means performs control so as to perform resizing processing on the first conversion information added to the first image, or performs control so as to perform resizing processing on the second conversion information added to the second image.

11. The apparatus according to claim 10, wherein
the first generation means generates the second conversion information added to the second image from the first conversion information.

12. The apparatus according to any one of claims 1 to 6, wherein
resizing processing of the first image includes enlargement processing, and
the control means performs control so as to partially execute enlargement processing on the first conversion information.

13. The apparatus according to claim 12, wherein
the enlargement processing includes super-resolution processing by machine learning.

14. The apparatus according to any one of claims 1 to 13, wherein comprising
the first conversion information is any of information for converting an image in a first dynamic range into an image in a second dynamic range, information for converting an image in the second dynamic range into an image in the first dynamic range, or information for converting an image in the first dynamic range into an image in a first dynamic range having a different dynamic range.

15. The apparatus according to any one of claims 1 to 14, further comprising:
an image capture means (102); and
a second generation means (211) configured to generate the first image from a RAW image generated by the image capture means.

16. A control method of an image processing apparatus comprising:
a step of generating conversion information used for generating an image having a different dynamic range from a first image;
a step of executing resizing processing on the first image; and
a step of controlling whether or not to execute resizing processing on the conversion information added to the first image when resizing processing is executed on the first image.

17. A computer-readable storage medium storing a program that causes a computer to function as the image processing apparatus according to any one of claims 1 to 15.

18. A program that causes a computer to function as the image processing apparatus according to any one of claims 1 to 15.
